# EUROPÄISCHE PATENTANMELDUNG

(11) **EP 1 132 664 A2**
(43) Veröffentlichungstag der Anmeldung: **12.09.2001**
(21) Anmeldenummer: 01103703.3
(22) Anmeldetag: 15.02.2001
(51) Int. Cl.: F16J 15/00

(54) **Elastische Dichtung für Formwerkzeuge sowie Verfahren zur Verbesserung der selbsttrennenden Eigenschaften derartiger Dichtungen**

(30) Priorität: 09.03.2000 DE 10011550
(71) Anmelder: Heidel GmbH & Co. KG, Werkzeug- u. Maschinenfabrikation, 41751 Viersen (Boisheim) (DE)
(72) Erfinder: Hoogen, Norbert, Dr., 47533 Kleve (DE); Rosen, Frank, 41479 Viersen (DE); Lencer, Dieter, 41844 Wegberg (DE)
(74) Vertreter: von Raffay, Vincenz, Dipl.-Ing.

(57) **Zusammenfassung**

Die elastische Dichtung für Formwerkzeuge zur Herstellung von Fahrzeuginnenteilen, insbesondere aus Mehrkomponentenkunststoff, vorzugsweise Polyurethan, ist als konturfertige elastische Dichtung aus thermoplastischem Elastomer (TPE) hergestellt. Hierdurch wird die Lebensdauer, d.h. die Einsatzzeit der elastischen Dichtung erheblich erhöht, d.h wenn Mehrkomponentenkunststoff mit der Dichtung in Berührung gelangt, haftet dieser nicht an der Dichtung fest an, bzw. kann er leicht wieder getrennt werden. Die Standzeit der Dichtung wird um ein vielfaches erhöht, wodurch das gesamte Verfahren zur Herstellung der Fahrzeuginnenteile sehr viel wirtschaftlicher wird. Insbesondere kann die elastische Dichtung vor dem Einbau in das Formwerkzeug in paraffinisches Öl getränkt werden, um diese gewünschten Eigenschaften noch zu verbessern.

## Beschreibung

Die Erfindung betrifft eine elastische Dichtung nach dem Oberbegriff des Anspruches 1 sowie ein Verfahren zur Verbesserung der selbsttrennenden Eigenschaften derartiger Dichtungen.

Fahrzeuginnenteile, d.h. Türverkleidungen, Armaturentafeln und dgl. sind im modernen Fahrzeugbau kompliziert gestaltete Teile, die mit einer Dekorfolie aus Stoff oder Leder kaschiert sind. Im Inneren befindet sich ein Träger. Die Kaschierung wird durch Mehrkomponentenkunststoff, vorzugsweise Polyurethan vorgenommen, wobei während des Herstellungsprozesses ein Aufschäumen stattfindet. Der Mehrkomponentenkunststoff sorgt durch seine starken Klebeeigenschaften für eine feste Verbindung der Dekorfolie mit dem Träger. Insgesamt entsteht ein Fahrzeuginnenteil mit den gewünschten Soft-Touch-Eigenschaften.

Die Formwerkzeuge zur Herstellung derartiger Fahrzeuginnenteile sind entsprechend kompliziert gestaltet, wobei Dichtschnüre zwischen Oberwerkzeug und Unterwerkzeug zum Einsatz kommen, die ein Austreten des Mehrkomponentenkunststoffes verhindern sollen. Hierbei gelangen die Dichtschnüre mit dem Mehrkomponentenkunststoff in Berührung und es erfolgt ein Verkleben aufgrund der starken Klebeeigenschaften dieses Mehrkomponentenkunststoffes. Dieses wiederum führt zu kurzen, nicht rentablen Standzeiten. Diese Standzeiten lassen sich nur sehr eingeschränkt durch massiven Einsatz von Trennmitteln, die auf die Dichtschnüre aufgesprüht werden, verlängert.

Der Erfindung liegt nun die Aufgabe zugrunde, eine elastische Dichtung der eingangs genannten Art zu schaffen, die die gewünschten elastischen Eigenschaften aufweist, leicht verarbeitet werden kann und bei langer Lebensdauer, insbesondere leicht von dem Mehrkomponentenkunststoff, der mit der Dichtung in Berührung gelangt, getrennt werden kann. Weiterhin liegt der Erfindung die Aufgabe zugrunde, ein entsprechendes Verfahren zu schaffen.

Diese Aufgabe wird grundsätzlich durch das Kennzeichen des Anspruches 1 gelöst.

Die Lebensdauer, d.h. die Einsatzzeit der elastischen Dichtung wird hierdurch erheblich erhöht, d.h. wenn Mehrkomponentenkunststoff mit der Dichtung in Berührung gelangt, haftet dieser nicht an der Dichtung fest an, bzw. kann er leicht wieder getrennt werden. Die Standzeit der Dichtung wird um ein vielfaches erhöht, wodurch das gesamte Verfahren zur Herstellung der Fahrzeuginnenteile sehr viel wirtschaftlicher wird.

In besonders vorteilhafter Weise ist die elastische Dichtung so ausgestaltet, wie in Anspruch 2 angegeben bzw. so hergestellt, wie in Anspruch 3 unter Schutz gestellt.

Die Aufnahme des paraffinischen Öls läßt sich in vorteilhafter Weise durch Temperierung zeitlich steuern, d.h. die Aufnahme der paraffinischen Substanz durch die TPE-Matrix läßt sich sowohl durch Temperierung als auch durch die Zeit der Einwirkung steuern.

Das erfindungsgemäße Verfahren erzeugt die Standzeit der Dichtungen um den Faktor 8 bis 10. Vorteilhaft ist dabei weiterhin, daß das thermoplastische Elastomer (TPE) vollständig silikonfrei ist.

Die konturfertige Dichtschnur, d.h. die Dichtschnur, so wie sie in das Formwerkzeug eingebaut werden soll, kann zur Lebensverlängerung vor ihrem Einbau in das paraffinische Öl eingelegt werden, wobei ggf. eine Erwärmung erfolgt. Das thermoplastische Elastomermaterial nimmt unter Beibehaltung seiner mechanischen Eigenschaften das paraffinische Öl auf. Dieses zusätzlich aufgenommene paraffinische Öl ist physikalisch in die Matrix des thermoplastischen Elastomer eingebunden und tropft nicht aus. Folgeprozesse (Umbugen, Kleben, Kaschieren usw.) werden nicht beeinträchtigt.

## Patentansprüche

1. Elastische Dichtung für Formwerkzeuge, insbesondere zur Herstellung von Fahrzeuginnenteilen aus Mehrkomponentenkunststoff, vorzugsweise Polyurethan, **dadurch gekennzeichnet**, daß die konturfertige, elastische Dichtung aus thermoplastischem Elastomer (TPE) besteht.

2. Elastische Dichtung nach Anspruch 1, **dadurch gekennzeichnet**, daß die konturfertige elastische Dichtung aus thermoplastischem Kunststoff (TPE) vor dem Einbau in das Formwerkzeug in paraffinisches Öl eingelegt ist.

3. Verfahren zur Verbesserung der selbsttrennenden Eigenschaften von elastischen Dichtungen nach Anspruch 1, **dadurch gekennzeichnet**, daß die konturfertige, elastische Dichtung aus thermoplastischem Elastomer (TPE) vor dem Einbau in das Formwerkzeug in paraffinisches Öl eingelegt wird.

4. Verfahren nach Anspruch 3, **dadurch gekennzeichnet**, daß die Aufnahme des paraffinischen Öls durch Temperierung zeitlich gesteuert wird.
